# EUROPEAN PATENT SPECIFICATION

(11) **EP 2 704 586 B1**
(45) Date of publication and mention of the grant of the patent: **07.02.2018**
(21) Application number: 12723844.2
(22) Date of filing: 03.05.2012
(51) Int. Cl.: A23G 9/22, B67D 7/34

(54) **METHOD AND APPARATUS FOR CONTROLLING THE DISPENSING OF FOOD PRODUCTS**
VERFAHREN UND VORRICHTUNG ZUR STEUERUNG DER AUSGABE VON LEBENSMITTELN
PROCÉDÉ ET APPAREIL POUR COMMANDER LA DISTRIBUTION DE PRODUITS ALIMENTAIRES

(30) Priority: 04.05.2011 IT BO20110249
(43) Date of publication of application: 12.03.2014
(73) Proprietor: S.P.M. Drink Systems S.P.A., 41057 Spilamberto (MO) (IT)
(72) Inventor: GRAMPASSI, Enrico, I-41057 Spilamberto (MO) (IT)
(74) Representative: Manzella & Associati
(86) International application number: PCT/EP2012/058120
(87) International publication number: WO 2012/150297

(56) References cited:
- US-A1- 2003 006 281
- US-A1- 2005 015 348

## Description

### Technical Field

The present invention regards a method for controlling the dispensing of food products, such as for example hot beverages or refrigerated products of the type of ice creams, sorbets and the like, in an apparatus for preparing such food products.

### Background Art

Apparatuses have been known to enable the instantaneous dispensing of refrigerated products such as for example beverages, ice creams, sorbets and the like.

In particular, apparatuses have been known consisting of a tank suitable to contain the product to be dispensed, in which are arranged a cooling device for cooling the product to the suitable temperature and a mixing device which determines the continuous circulation of the product inside the tank. The circulation device, for example constituted by a screw member taken in rotation about an axis longitudinal to the tank, is suitable to convey the cooled product towards a front zone, where is placed a device for dispensing the product. The dispenser device is provided with an obturator member which can be actuated through an external lever member.

Apparatuses which enable to produce and dispense instantaneously hot beverages, in particular beverages obtained mixing water with soluble products in previously set doses, have also been known. Such apparatuses are generally provided with a boiler for heating the water, with one or more container for the soluble products and with a device for mixing dosed quantities of water and of soluble products. A dispenser device, arranged in a front zone of the apparatus, allows to dispense the so prepared hot beverage.

In the cited apparatuses, the products to be dispensed or the ingredients for their preparation are generally provided by the producer in suitable containers, containing a quantity of product suitable for the preparation and the dispensing of a predetermined number of doses, depending on the typology of the product.

An exigency of the considered field is that of controlling that the used product is the one provided by the producer and not another one. In fact it is observed that often the cited apparatuses are provided in use to the retailers by the companies which produce the products to be dispensed, therefore it is important to these companies that their own apparatuses are not used with products of third parties.

It is then observed that the control of the origin of the dispensed products also constitutes a guarantee of their constant quality. The US application 2005/0015348 discloses a method and apparatus for controlling the dispensing of food products in a dispenser apparatus.

### Disclosure

The task of the present invention is that of solving the aforementioned problems, devising a method which allows to efficiently control the dispensing of food products in suitable apparatuses, in particular inhibiting the dispensing of products of non-controlled origin.

Within such task, it is a further scope of the present invention that of providing an apparatus which allows to prepare and dispense food products, such as for example hot beverages or refrigerated products of the type of ice creams, sorbets and the like, ensuring the control of the origin of the products and/or of the ingredients used.

Another object of the invention is that of providing an apparatus having a simple conception, a securely reliable functioning and versatile use, as well as relatively economic cost.

The cited scopes are attained, according to the present invention, by the method and by the apparatus for controlling the dispensing of food products according to claims 1 and 5.

According to the present invention, the method for controlling the dispensing of food product provides to introduce in a housing seat of the dispenser apparatus a container of a product to be dispensed provided with an automatic identification electronic device containing information about the origin of the same product and to perform the reading of said electronic device by means of a radio frequency reading device associated with the apparatus. Following the recognition of the electronic device by the radio frequency reading device, the functioning of the apparatus is enabled, for a predetermined period of time and at the same time the electronic device is disabled so as to prevent the re-use of the same container for a product to be dispensed and enabling only cleaning operations of said apparatus.

The present invention also regards an apparatus for preparing and dispensing food products comprising a radio frequency reading device suitable to perform the reading of an electronic device for automatic identification associated with a container of a product to be dispensed and containing information about the origin of the same product, to enable the functioning of the apparatus for a predetermined period of time following the recognition of said electronic device by said radio frequency reading device.

Preferably the cited electronic device for automatic identification consists of a tag containing information suitable to be read by a reading device using the RFID (Radio Frequency Identification) technology.

### Description of Drawings

Details of the invention shall be more apparent from the detailed description of a preferred embodiment of the apparatus for preparing and dispensing food products, illustrated for indicative purposes in the attached drawings, wherein:
figure 1 shows a perspective view of an apparatus for dispensing refrigerated products operating according to the method object of the invention;
figure 2 shows a section view thereof according to a median longitudinal plane;
figure 3 shows a section view according to a median longitudinal plane of an apparatus for dispensing hot beverages operating according to the method object of the invention.

### Best Mode

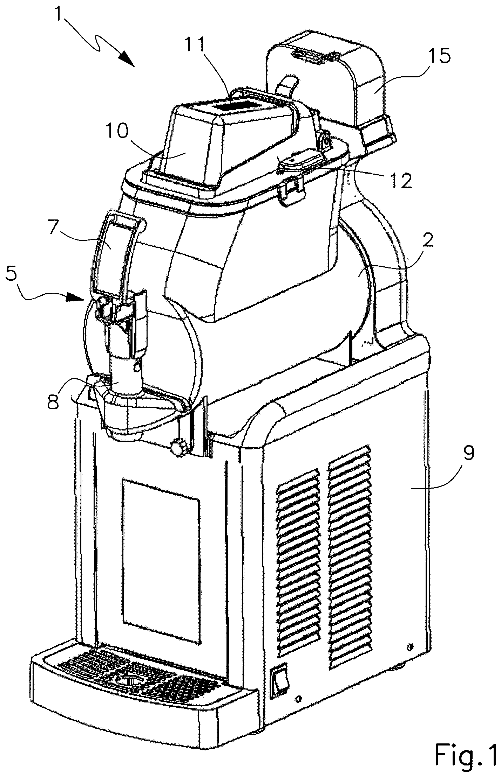

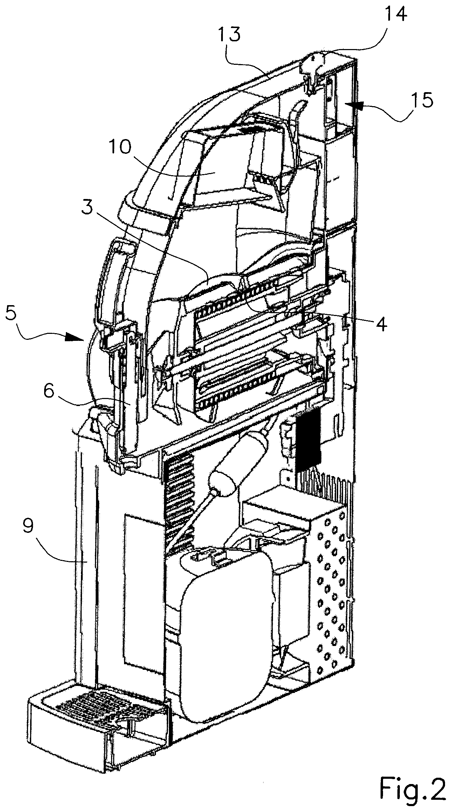

With particular reference to figures 1 and 2, the apparatus for preparing and dispensing refrigerated products, such as for example crushed-ice drinks, ice creams, sorbets and the like, is indicated in its entirety with 1.

The apparatus 1 provides a tank 2 for containing the product to be prepared, the tank being preferably made of transparent plastic material. Inside the containment tank 2 is arranged, in a known way, a mixing device 3 consisting of a screw member brought in rotation according to an axis longitudinal to the tank 2 in order to determine the continuous circulation of the product inside the same tank 2. Inside the tank 2 is further arranged a cooling device 4 for cooling the product to the suitable temperature. A temperature sensor, preferably arranged inside the tank 2 in proximity of the front wall, is suitable to control the temperature of the product at the dispensing area.

The containment tank 2 frontally presents a dispenser device 5 provided with an obturator member 6 which can be actuated by means of an external lever member 7. The obturator member 6 is sliding inside a cylindrical seat realized, with substantially vertical axis, by a sleeve 8 shaped by the tank 2.

The containment tank 2 is mounted above a base body 9 having a substantially prismatic shape. The base body 9 is suitable to contain in its own inside the actuation members of the apparatus, known per se and not described in greater detail.

The product to be dispensed if provided by the producer company in a suitable container 10, suitable to be associated with the described apparatus 1. More particularly, the apparatus 1 has, above the containment tank 2, a housing seat 12 for the above mentioned container 10, suitable to be set in communication with the inside of the same tank 2. Inside the housing seat 12 are provided means suitable to perform the opening of a lower zone of the container 10 when it is inserted, to enable the descent of the product into the tank 2.

The housing seat 12 of the container 10 is closed, during use, by a cover 13, equally preferably made of transparent plastic material (see figure 2). For a greater safety, the cover 13 is provided with a key blocking member 14.

According to the present invention, the container 10 of the product to be dispensed is provided with an electronic device 11 for automatic identification of the type commonly known as "tag". The information contained in the tag 11 are read by a reading device 15 using the RFID (Radio Frequency Identification) technology, arranged behind the housing 12 above the tank 2. Practically, the reading device 15 is provided with an antenna which is suitable to emit a signal which activates the RFID tag 11 through radio frequency; the so activated tag 11 transmits the information contained therein to the reading device 15.

More precisely, in the present case, the RFID tag 11 present on the container 10 of the product to be dispensed contains at least the information necessary to identify the same product. Obviously the tag 11 can contain additional information, such as for example the preparation and expiry dates of the product.

The method for controlling the dispensing of refrigerated products, such as crushed-ice drinks, ice creams, sorbets and the like, therefore provides to introduce into the housing seat 12 of the apparatus 1 the container 10 of the product to be dispensed provided with the RFID tag 11. The reading device 15 activates the tag 11 and receives back the information contained in the same tag 11.

If the tag 11 is recognized by the reading device 15, the functioning of the dispenser apparatus 1 is enabled for a predetermined period of time, depending on the typology of product contained in the container 10. Once such a period of time is ended, the functioning of the cooling system is disabled and the apparatus can only carry out the periodical cleaning operations.

Simultaneously the tag 11 of the used container 10 is disabled, so as to prevent a successive re-use thereof.

Following the consent provided by the RFID reading device, the opening of the container 10 is actuated, in a way as to allow the introduction of the product in the tank 2, and the preparation cycle is activated. In particular, the cooling device 4 is automatically activated, setting the suitable work temperatures, and the screw member of the mixing device 3 is driven in rotation at a predefined rate. When required, the dispensing of the product is performed by opening the obturator member 6 of the dispenser device 5 through the lever member 7.

If vice versa the tag 11 is not recognized by the reading device 15, the normal functioning of the apparatus is inhibited. Also in this case the apparatus can only perform the periodical cleaning operations.

The method and the apparatus object of the invention therefore attain the scope of controlling the dispensing of food products in apparatuses, in particular inhibiting the dispensing of products having a non-controlled origin.

In fact the normal functioning of the apparatus and the dispensing of the product are possible only after the recognition of the container 10 introduced in the housing seat 12.

Another advantage offered by the method and the apparatus object of the invention is that it enables the functioning of the apparatus and consequently the dispensing of the product for a limited period of time, depending on the typology of the product. This provides a further guarantee of the constant quality of the dispensed product.

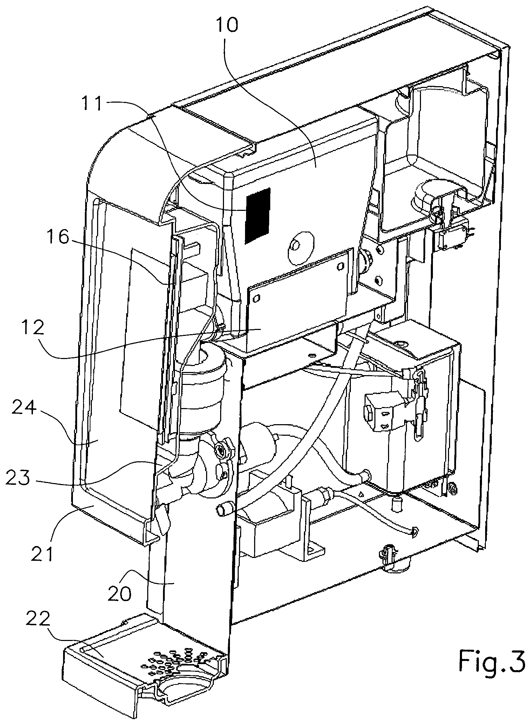

In figure 3 is illustrated an apparatus for dispensing hot beverages operating according to the described method. Such an apparatus provides, protruding frontally from a casing 20 having a prismatic shape, a box body 21, under which are arranged the means for dispensing the product, known per se, which cannot be seen in the drawing. The body 21 projects above a base 22 for supporting the container designed to receive the hot beverage, for example a glass or a cup. Inside the casing 20 are arranged, in a way known per se, a boiler for heating the water, one or more containers for the soluble products and a relative device for mixing dosed quantities of water and of soluble product.

In the upper part of the casing 20 is arranged a housing seat, for greater clarity again indicated with 12, designed to house a container 10 of a soluble product, designed in particular to be mixed with dosed quantities of water by means of a suitable mixing device of the apparatus, for preparing the beverage to be dispensed. The container 10 of the product is provided with a tag 11 containing at least the information necessary for identifying the same product, as previously described.

The box body 21 shapes a profiled portion which is suitable to define a gap 23 with respect to a panel 24 of front closure. Inside such a gap 23 is suitably housed an electronic card 16 which is suitable to incorporate the antenna of the cited RFID technology reading device, suitable to emit the signal which activates the tag 11 of the container 10 through radio frequency.

The method for controlling the dispensing of the hot beverage is obviously analogous to the one previously described. Also in this case, the reading device activates the tag 11 of the container 10 and receives back the information contained in the same tag 11. If the tag 11 is recognized by the reading device, the functioning of the apparatus is enabled and simultaneously the same tag 11 is disabled, so as to prevent a successive re-use of the same container 10.

The apparatuses described for indicative purpose are susceptible of numerous modifications and variants according to the diverse exigencies.

In practice, the embodiment of the invention, the materials used, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Method for controlling the dispensing of food products in a dispenser apparatus, **characterized in that** it provides the steps of
a. introducing in a housing seat (12) of the apparatus (1) a container (10) for a product to be dispensed, provided with an electronic device (11) for the automatic identification, containing information about the origin of the same product;
b. performing the activation and the reading of said electronic device (11) by means of a radio frequency reading device (15) associated with said apparatus (1);
c. enabling the functioning of the apparatus (1), after the recognition of said electronic device (11) by said radio frequency reading device (15), for a predetermined period of time;
d. at the same time disabling said electronic device (11) so as to prevent the re-use of said container (10) for a product to be dispensed;
e. at the end of said predetermined period of time, enabling only cleaning operations of said apparatus (1).

2. Method according to claim 1, **characterized in that** said electronic device (11) for the automatic identification comprises a lag containing information suitable to be read by a said reading device (15) using the RFID (Radio Frequency Identification) technology.

3. Method according to claim 1 or 2, **characterized in that** it provides for actuating, upon recognition of said electronic device (11), the opening of said container (10), so as to allow the introduction of the same product in the apparatus (1), and for consequently activating the preparation cycle.

4. Apparatus for preparing and dispensing of food products, **characterized in that** it comprises a housing seat (12) for a container (10) for a product to be dispensed; a radio frequency reading device (15) suitable to perform the reading of an electronic device (11) of automatic identification associated with said container (10) and containing information about the origin of the same product, in order to enable the functioning of the apparatus for a predetermined period of time after the recognition of said electronic device (11) by said radio frequency reading device (15), and to disable said electronic device (11) after said period of time;
**and in that** said radio frequency reading device (15) is provided with an antenna which is suitable to emit a signal for activating through radio frequency said electronic device (11); **and in that** said antenna of the radio frequency reading device (15) is incorporated in an electronic card (16) housed in proximity of said housing seat (12).

5. Apparatus according to claim 4, **characterized in that** said electronic device (11) for the automatic identification comprises a tag containing information suitable to be read by a said reading device (15) using the RFID (Radio Frequency Identification) technology.

## Patentansprüche

1. Verfahren für die Kontrolle der Ausgabe von Lebensmitteln in einem Ausgabegerät, **dadurch gekennzeichnet, dass** sie folgende Phasen vorsieht:
a. Einführung eines Behälters (10) eines auszugebenden Produktes, der mit einer elektronischen Vorrichtung (11) mit automatischer Identifikation ausgestattet ist, die Informationen über den Ursprung dieses Produktes enthält, in eine Aufnahme (12) des Geräts (1);
b. Ausführung der Aktivierung und der Auslesung der genannten elektronischen Vorrichtung (11) durch ein Lesegerät (15) mit Radiofrequenz, das mit dem genannten Gerät (1) verbunden ist;
c. Aktivierung des Betriebs des Geräts (1) nach der Erkennung der genannten elektronischen Vorrichtung (11) seitens des genannten Lesegeräts (15) mit Radiofrequenz für einen vorbestimmten Zeitraum;
d. Gleichzeitige Deaktivierung der genannten elektronischen Vorrichtung (11), um die Wiederverwendung des genannten Behälters (10) des auszugebenden Produktes zu verhindern;
e. Nach Beendigung des genannten Zeitraums nur die Reinigungsverfahren des genannten Geräts (1) aktivieren.

2. Verfahren nach Anspruch 1, **dadurch gekennzeichnet, dass** die genannte elektronische Vorrichtung (11) zur automatischen Identifikation ein Tag mit Informationen enthält, die dazu geeignet sind, durch das genannte Lesegerät (15) mit Verwendung der RFID-Technologie (Radio Frequency Identification) ausgelesen zu werden.

3. Verfahren nach Anspruch 1 oder 2, **dadurch gekennzeichnet, dass** sie die Aktivierung nach der Erkennung der genannten elektronischen Vorrichtung (11), die Öffnung des genannten Behälters (10), um die Einführung dieses Produktes in das Gerät (11) zu ermöglichen, und die darauffolgende Aktivierung des Vorbereitungszyklus vorsieht.

4. Gerät für die Vorbereitung und Ausgabe von Lebensmitteln, **dadurch gekennzeichnet, dass** es wie folgt enthält : eine Aufnahme (12) für einen Behälter (10) eines auszugebenden Produktes; ein Lesegerät (15) mit Radiofrequenz, das dazu dient, die Auslesung einer elektronischen Vorrichtung (11) zur automatischen Identifikation, die mit dem genannten Behälter (10) verbunden ist und die Informationen über den Ursprung dieses Produktes enthält, um den Betrieb des Geräts nach der Erkennung der genannten elektronischen Vorrichtung (11) seitens des genannten Lesegeräts (15) mit Radiofrequenz für einen vorbestimmten Zeitraum zu aktivieren, und die Deaktivierung der genannten elektronischen Vorrichtung (11) nach dem genannten Zeitraum auszuführen;
**und dadurch, dass** das genannte Lesegerät (15) mit Radiofrequenz mit einer Antenne ausgestattet ist, die dazu geeignet ist, ein Signal auszusenden, um die genannte elektronische Vorrichtung (11) über Radiofrequenz zu aktivieren;
**und dadurch, dass** die genannte Antenne des Lesegeräts (15) mit Radiofrequenz in einer elektronischen Steuerkarte (16) eingebaut ist, die nahe an der genannten Aufnahme (12) sitzt.

5. Gerät nach Anspruch 4, **dadurch gekennzeichnet, dass** die genannte elektronische Vorrichtung (11) zur automatischen Identifikation ein Tag mit Informationen enthält, die dazu geeignet sind, durch das genannte Lesegerät (15) mit Verwendung der RFID-Technologie (Radio Frequency Identification) ausgelesen zu werden.

## Revendications

1. Procédé pour commander la distribution de produits alimentaires d'un appareil de distribution, **caractérisé en ce qu'**il comprend les étapes suivantes :
a. introduire dans un siège de logement (12) de l'appareil (1) un récipient (10) pour un produit à distribuer muni d'un dispositif électronique (11) pour l'identification automatique, contenant des informations sur l'origine du produit lui-même ;
b. réaliser l'activation et la lecture dudit dispositif électronique (11) au moyen d'un dispositif de lecture (15) de radiofréquence associé audit appareil (1) ;
c. activer le fonctionnement de l'appareil (1) après que ledit dispositif électronique (11) soit reconnu par ledit dispositif de lecture (15) de radiofréquence, pendant une période de temps prédéterminée ;
d. en même temps, désactiver ledit dispositif électronique (11) de manière à empêcher la réutilisation dudit récipient (10) pour un produit à distribuer ;
e. à la fin de ladite période de temps prédéterminée, activer uniquement les opérations de nettoyage dudit appareil (1).

2. Procédé selon la revendication 1, **caractérisé en ce que** ledit dispositif électronique (11) pour l'identification automatique comprend une étiquette contenant des informations aptes à être lues par ledit dispositif de lecture (15) en utilisant la technologie RFID (Identification par radiofréquence).

3. Procédé selon la revendication 1 ou 2, **caractérisé en ce qu'**il prévoit l'actionnement, lors de la reconnaissance dudit dispositif électronique (11), de l'ouverture dudit récipient (10), de manière à permettre l'introduction du produit lui-même dans l'appareil (1), et de déclencher par conséquent le cycle de préparation.

4. Appareil pour la préparation et la distribution de produits alimentaires, **caractérisé en ce qu'il** comprend un siège de logement (12) pour un récipient (10) d'un produit à distribuer ; un dispositif de lecture (15) de radiofréquence apte à lire un dispositif électronique (11) pour l'identification automatique associé audit récipient (10) et contenant des informations concernant l'origine du produit, afin d'activer le fonctionnement de l'appareil pour une période de temps prédéterminée après que ledit dispositif électronique (11) soit reconnu par ledit dispositif de lecture (15) de radiofréquence, et pour désactiver ledit dispositif électronique (11) après ladite période de temps ;
**et par le fait que** ledit dispositif de lecture (15) de radiofréquence est muni d'une antenne apte à émettre un signal pour déclencher par radiofréquence ledit dispositif électronique (11);
**et par le fait que** ladite antenne du dispositif de lecture (15) de radiofréquence est noyée dans une carte électronique (16) logée à proximité dudit siège de logement (12).

5. Appareil selon la revendication 4, **caractérisé en ce que** ledit dispositif électronique (11) pour l'identification automatique comprend une étiquette contenant des informations aptes à être lues par ledit dispositif de lecture (15) en utilisant la technologie RFID (Identification par radiofréquence).
